# EUROPÄISCHE PATENTSCHRIFT

(11) **EP 3 801 814 B1**
(45) Veröffentlichungstag und Bekanntmachung des Hinweises auf die Patenterteilung: **23.03.2022**
(21) Anmeldenummer: 19720547.9
(22) Anmeldetag: 26.04.2019
(51) Int. Cl.: B01D 33/21, B01D 33/72, B01D 33/80

(54) **SCHEIBENFILTER**
DISK FILTER
FILTRE À DISQUES

(30) Priorität: 11.06.2018 DE 102018113804
(43) Veröffentlichungstag der Anmeldung: 14.04.2021
(73) Patentinhaber: Voith Patent GmbH, 89522 Heidenheim (DE)
(72) Erfinder: GOMMEL, Axel, 88214 Ravensburg (DE)
(74) Vertreter: Voith Patent GmbH - Patentabteilung
(86) Internationale Anmeldenummer: PCT/EP2019/060732
(87) Internationale Veröffentlichungsnummer: WO 2019/238306

(56) Entgegenhaltungen:
- WO-A1-2011/048272
- CH-A- 493 260
- JP-A- H06 327 947
- US-A- 4 824 581

## Beschreibung

Die Erfindung betrifft einen Scheibenfilter zur Abtrennung von Faserstoffen aus einer Faserstoffsuspension, mit einem Behälter zur Aufnahme der Suspension, einer sich horizontal im Behälter erstreckenden, rotierbar gelagerten und mit einem Antrieb gekoppelten Hohlwelle, mehreren senkrecht auf der Hohlwelle befestigten, axial voneinander beabstandeten und flüssigkeitsdurchlässigen Filterscheiben, deren Innenraum mit der Hohlwelle in Verbindung steht, wenigstens einem Zulauf für die Suspension, einer jeder Filterscheibe zugeordneten Ablösevorrichtung zur Beförderung der sich an der Außenseite der Filterplatten gebildeten Vliesschicht in einen der zwischen den Filterscheiben angeordneten Stoffausläufe.

Derartige Scheibenfilter werden zur Eindickung der Suspension und in der Papierindustrie insbesondere zur Faserstoffrückgewinnung eingesetzt. Beispiele für Scheibenfilter sind in der WO 2011/048272 A1 und der CH 493260 A offenbart.

Hierzu ist die Hohlwelle in der Regel mit einer Unterdruckquelle verbunden. Auf den Filterscheiben bildet sich infolge des Druckunterschieds zwischen der Faserstoffsuspension und dem Innenraum der Filterscheiben eine Vliesschicht. Beim Eintauchen der Filterscheiben in die Faserstoffsuspension gelangt so weitestgehend nur Wasser in den Innenraum der Filterscheiben und damit die Hohlwelle.

Die Vliesschicht wird beim Auftauchen über Schaber entfernt und zum entsprechenden Stoffauslauf geführt oder mit Wasser in den Stoffauslauf gespritzt.

Bei hohen Stoffdichten der zugeführten Suspension kann es dabei allerdings leicht zu einer zur starken Eindickung des Stoffes kommen. Dies führt dann dazu, dass die Vliesschicht von den rotierenden Filterscheiben abgeschert wird, was die Qualität des Filtrats beeinträchtigt.

Auch Beschädigungen der Filterscheiben sind dadurch möglich, insbesondere wegen der hohen Kräfte im Bereich der Engstelle zwischen Filterscheibe und Stoffauslauf.

Die Aufgabe der Erfindung ist es daher mögliche Beschädigungen bei einer möglichst hohen Effizienz der Entwässerung zu vermeiden.

Erfindungsgemäß wurde die Aufgabe dadurch gelöst, dass die Menge und/oder die Stoffdichte der dem Behälter zugeführten Suspension in Abhängigkeit vom Drehmoment des Antriebs gesteuert wird, um einerseits die Ausbildung einer Vliesschicht zu gewährleisten und andererseits eine Beschädigung der Filterscheiben durch zu hohe Scherkräfte, die aus überhöhten Drehmomenten des Antriebs resultieren, zu verhindern.

Die Erfindung nutzt die Erkenntnis, dass das Drehmoment von der Stoffdichte im Behälter abhängt. Auf diese Weise können Beschädigungen der Filterscheiben sehr effektiv vermieden werden.

Dementsprechend sollte der Antrieb bei Erreichen eines vorgegebenen, maximalen Drehmoments abgeschaltet werden.

Im Hinblick auf die üblichen Konstruktionen bei Scheibenfiltern, speziell bei mit Filterbeuteln bespannten Filterscheiben, liegt das vorgegebene, maximale Drehmoment bei unter 2.000 Nm/Filterscheibe.

Um für die erfindungsgemäße Steuerung bzw. Regelung ein ausreichend großes Betriebsfenster zu gewährleisten, sollte das vorgegebene, maximale Drehmoment daher bei über 2.000, vorzugsweise bei mehr als 4.000 und insbesondere über 6.000 Nm/Filterscheibe liegen.

Wird im Unterschied hierzu ein vorgegebenes, minimales Drehmoment erreicht, so deutet dies darauf hin, dass der Scheibenfilter mit zu wenig Faserstoff betrieben wird und daher keine Filtermatte ausbildet.

In diesem Fall sollte der Antrieb abgeschaltet oder die Menge und/oder die Stoffdichte der dem Behälter zugeführten Suspension erhöht werden.

Zwecks Vermeidung einer Überlastung der Filterscheiben, sollte die Stoffdichte der dem Behälter zugeführten Suspension bei Erreichen eines vorgegebenen, maximalen Drehmoment-Grenzwertes verringert werden, bis das Drehmoment des Antriebs wieder ausreichend unter diesem maximalen Drehmoment-Grenzwert liegt.

Um zu verhindern, dass das Suspensionsniveau im Behälter unkontrolliert abfällt oder der Scheibenfilter überläuft wird die Drehzahl der Filterscheiben üblicherweise geregelt.

Liegt die Drehzahl der Hohlwelle unter einem vorgegebenen, unteren Drehzahl-Grenzwert, so bedeutet dies, dass der Scheibenfilter noch Kapazitätsreserven aufweist. In diesem Fall kann gleichzeitig die Menge der dem Behälter zugeführten Suspension erhöht werden.

Im anderen Fall, dass die Drehzahl der Hohlwelle über einem vorgegebenen, oberen Drehzahl-Grenzwert liegt, kann von einer Normalauslastung des Scheibenfilters ausgegangen werden. Dementsprechend kann gleichzeitig die Menge der dem Behälter zugeführten Suspension konstant bleiben oder eventuell gesenkt werden.

Mit Vorteil sind der untere und der obere Drehzahl-Grenzwert gleichgroß.

Nachfolgend soll die Erfindung an einem Ausführungsbeispiel näher erläutert werden.

In der beigefügten Zeichnung zeigt:
Figur 1: eine schematische Ansicht eines Scheibenfilters mit Maschinensteuerung 9 und
Figur 2: eine Draufsicht des Scheibenfilters.

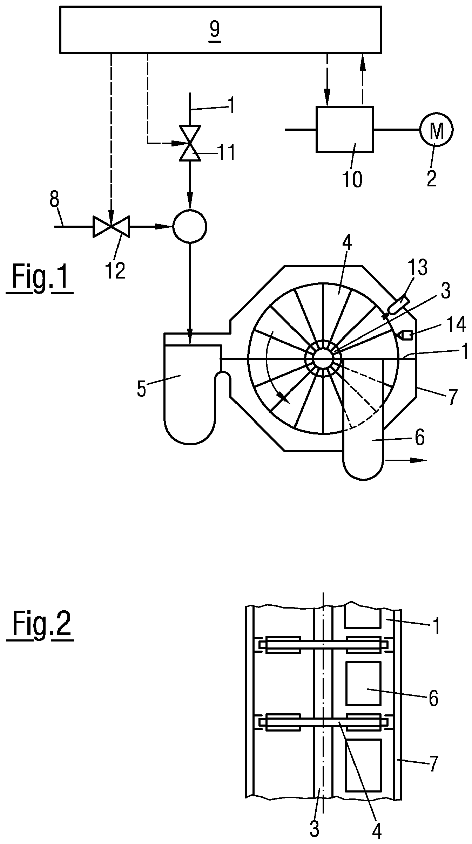

Die Faserstoff-Suspension 1 wird gemäß Figur 1 über einen Zulauf 5 in den Behälter 7 des Scheibenfilters geleitet. Im Behälter 7 befindet sich eine horizontal verlaufende und rotierbar gelagerte Hohlwelle 3 mit mehreren axial voneinander beabstandeten Filterscheiben 4.

Die Rotation der Hohlwelle 3 geht von einem mit der Hohlwelle 3 gekoppelten Antrieb 2 aus, dessen Drehzahl über einen dazugehörigen Frequenzumrichter 10 gesteuert wird.

Die Filterscheiben 4 werden jeweils von mehreren kreisringsektorförmigen Filterelementen gebildet, die über je einen Fußteil mit der Hohlwelle 3 verbunden sind.

Zur Senkung des Herstellungsaufwandes besteht die Hohlwelle 3 aus mehreren, sich in axialer Richtung erstreckenden und in Umfangsrichtung nebeneinander angeordneten Modulen.

Die Filterelemente besitzen einen Innenraum, der über eine separate Öffnung der Hohlwelle 3 mit einem Kanal in derselben zur Fluidabführung verbunden ist. Der Innenraum der Filterelemente wird dabei von zwei perforierten und axial voneinander beabstandeten Filterplatten aus Metall begrenzt, was ein entsprechend großes maximales Drehmoment von wesentlich mehr als 2.000, im Allgemeinen zwischen 8.000 und 10.000 Nm/Filterscheibe erlaubt.

Um das Wasser aus der Suspension 1 abziehen zu können, stehen die Kanäle der Hohlwelle 3 mit einer Unterdruckquelle in Verbindung.

Die sich dabei an der Außenseite der Filterelemente, konkret am perforierten Bereich der Filterplatten bildende Vliesschicht wird nach dem Auftauchen aus der Suspension 1 in einen Stoffauslauf 6 befördert.

Hierzu befinden sich die Stoffausläufe 6 gemäß Figur 2 jeweils zwischen zwei benachbarten Filterscheiben 4.

Die Entfernung der Vliesschicht erfolgt mittels einer, jeder Filterscheibe 4 zugeordneten Ablösevorrichtung 13,14, welche einen oder mehrere Wasserstrahlen auf die entsprechende Filterplatte des jeweiligen Filterelementes richtet.

Zur Gewährleistung einer effizienten Entwässerung wird bei den Filterplatten eine möglichst umfassend perforierte und dennoch stabile Oberfläche angestrebt, was durch ein Wellenprofil der Filterplatten erreicht wird.

Damit sich einer Eindickung entgegenwirkende Strömungen in der Suspension 1 des Behälters 7 ausbilden, sind die Stoffausläufe 6 möglichst weit von den Zuläufen 5 entfernt, idealerweise gegenüberliegend vorgesehen.

Ist die Stoffdichte der über den Zulauf 5 zugeführten Suspension 1 zu hoch, so steigt die Stoffdichte insbesondere im Bereich zwischen den Filterscheiben 4 und den Stoffausläufen 6 stark an. Auf Grund der Reibung zwischen den Filterscheiben 4 und dem Faserstoff der Suspension 1 wird das Drehmoment des Antriebs 2 dann sehr groß.

Um eine Beschädigung der Filterscheiben 4 infolge der während der Rotation auf sie wirkenden Kräfte zu verhindern, überwacht eine Maschinensteuerung 9 das Drehmoment des Antriebs 2. Die hierfür notwendigen Informationen bzw. Signale werden vom Frequenzumrichter 10 an die Maschinensteuerung 9 geliefert.

Erreicht das aktuelle Drehmoment des Antriebs 2 den Wert eines vorgegebenen, maximalen Drehmoments, so wird der Antrieb 2 zur Vermeidung einer Beschädigung der Filterscheiben 4 abgeschaltet. Dabei liegt der Wert des vorgegebenen, maximalen Drehmoments wesentlich über 2.000 Nm pro Filterscheibe 4 des Scheibenfilters.

Da auch das Erreichen eines vorgegebenen, minimalen Drehmoments auf eine Störung hinweist, sollte dann ebenso der Antrieb 2 abgeschaltet werden.

Alternativ kann es aber auch angebracht sein, wenn die Maschinensteuerung 9 die Menge und/oder die Stoffdichte der dem Behälter 7 zugeführten Suspension 1 bei Erreichen eines vorgegebenen, minimalen Drehmoments erhöht.

Zur Steuerung von Menge und/oder Stoffdichte der dem Scheibenfilter zugeführten Suspension 1 werden die Ausgangs-Suspension 1 und Verdünnungswasser 8 über je eine, von der Maschinensteuerung 9 beeinflusste Pumpe 11,12 zu einem Mischpunkt geführt und von diesem zum Zulauf 5 des Scheibenfilters geleitet.

Damit kann die Maschinensteuerung 9 die Menge und/oder die Stoffdichte der dem Behälter 7 zugeführten Suspension 1 in Abhängigkeit vom Drehmoment des Antriebs 2 steuern.

Erreicht das aktuelle Drehmoment einen vorgegebenen, maximalen Drehmoment-Grenzwert, so wird die Stoffdichte der dem Behälter 7 zugeführten Suspension 1 verringert bis das Drehmoment wieder in einem sicheren Betriebsbereich liegt.

Liegt in diesem Fall die Drehzahl der Hohlwelle 3 unter einem vorgegebenen, unteren Drehzahl-Grenzwert, beispielsweise eine Umdrehung/Minute so kann zur besseren Auslastung des Scheibenfilters gleichzeitig die Menge der dem Behälter 7 zugeführten Suspension 1 erhöht werden.

Falls jedoch dabei die Drehzahl der Hohlwelle 3 über einem vorgegebenen, oberen Drehzahl-Grenzwert, beispielsweise eine Umdrehung/Minute liegt, so sollte gleichzeitig die Menge der dem Behälter 7 zugeführten Suspension 1 konstant bleiben oder gesenkt werden.

## Patentansprüche

1. Scheibenfilter zur Abtrennung von Faserstoffen aus einer Faserstoffsuspension, mit einem Behälter (7) zur Aufnahme der Suspension (1), einer sich horizontal im Behälter (7) erstreckenden, rotierbar gelagerten und mit einem Antrieb (2) gekoppelten Hohlwelle (3), mehreren senkrecht auf der Hohlwelle (3) befestigten, axial voneinander beabstandeten und flüssigkeitsdurchlässigen Filterscheiben (4), deren Innenraum mit der Hohlwelle (3) in Verbindung steht, wenigstens einem Zulauf (5) für die Suspension (1), einer jeder Filterscheibe (4) zugeordneten Ablösevorrichtung (13,14) zur Beförderung der sich an der Außenseite der Filterplatten gebildeten Vliesschicht in einen der zwischen den Filterscheiben (4) angeordneten Stoffausläufe (6), wobei die Menge der dem Behälter (7) zugeführten Suspension (1) in Abhängigkeit vom Drehmoment des Antriebs (2) gesteuert wird, um die Ausbildung einer Vliesschicht zu gewährleisten.

2. Scheibenfilter zur Abtrennung von Faserstoffen aus einer Faserstoffsuspension, mit einem Behälter (7) zur Aufnahme der Suspension (1), einer sich horizontal im Behälter (7) erstreckenden, rotierbar gelagerten und mit einem Antrieb (2) gekoppelten Hohlwelle (3), mehreren senkrecht auf der Hohlwelle (3) befestigten, axial voneinander beabstandeten und flüssigkeitsdurchlässigen Filterscheiben (4), deren Innenraum mit der Hohlwelle (3) in Verbindung steht, wenigstens einem Zulauf (5) für die Suspension (1), einer jeder Filterscheibe (4) zugeordneten Ablösevorrichtung (13,14) zur Beförderung der sich an der Außenseite der Filterplatten gebildeten Vliesschicht in einen der zwischen den Filterscheiben (4) angeordneten Stoffausläufe (6), wobei die Stoffdichte der dem Behälter (7) zugeführten Suspension (1) in Abhängigkeit vom Drehmoment des Antriebs (2) gesteuert wird, um die Ausbildung einer Vliesschicht zu gewährleisten.

3. Scheibenfilter nach Anspruch 1 oder 2,
**dadurch gekennzeichnet,**
**dass** der Antrieb (2) bei Erreichen eines vorgegebenen, maximalen Drehmoments abgeschaltet wird.

4. Scheibenfilter nach Anspruch 3,
**dadurch gekennzeichnet,**
**dass** das vorgegebene, maximale Drehmoment bei über 2.000, vorzugsweise bei mehr als 4.000 und insbesondere über 6.000 Nm/Filterscheibe (4) liegt.

5. Scheibenfilter nach einem der vorhergehenden Ansprüche,
**dadurch gekennzeichnet,**
**dass** der Antrieb (2) bei Erreichen eines vorgegebenen, minimalen Drehmoments abgeschaltet wird.

6. Scheibenfilter nach einem der Ansprüche 1 bis 4,
**dadurch gekennzeichnet,**
**dass** die Menge und/oder die Stoffdichte der dem Behälter (7) zugeführten Suspension (1) bei Erreichen eines vorgegebenen, minimalen Drehmoments erhöht wird.

7. Scheibenfilter nach einem der vorherigen Ansprüche,
**dadurch gekennzeichnet,**
**dass** die Stoffdichte der dem Behälter (7) zugeführten Suspension (1) bei Erreichen eines vorgegebenen, maximalen Drehmoment-Grenzwertes verringert wird.

8. Scheibenfilter nach Anspruch 7,
**dadurch gekennzeichnet,**
**dass** die Menge der dem Behälter (7) zugeführten Suspension (1) erhöht wird, sofern die Drehzahl der Hohlwelle (3) unter einem vorgegebenen, unteren Drehzahl-Grenzwert liegt.

9. Scheibenfilter nach Anspruch 7,
**dadurch gekennzeichnet,**
**dass** die Menge der dem Behälter (7) zugeführten Suspension (1) konstant bleibt oder gesenkt wird, sofern die Drehzahl der Hohlwelle (3) über einem vorgegebenen, oberen Drehzahl-Grenzwert liegt.

10. Scheibenfilter nach Anspruch 8 und 9,
**dadurch gekennzeichnet,**
**dass** der untere und der obere Drehzahl-Grenzwert gleichgroß sind.

## Claims

1. Disc filter for separating fibrous materials from a fibrous suspension, having a container (7) for receiving the suspension (1), having a rotatably mounted hollow shaft (3) which extends horizontally in the container (7) and is coupled to a drive (2), having multiple liquid-permeable filter discs (4) which are fastened vertically on the hollow shaft (3) and are spaced apart axially from one another and whose interior space is connected to the hollow shaft (3), having at least one feed (5) for the suspension (1), and having a detachment device (13, 14) which is assigned to each filter disc (4) and serves for transporting into one of the material discharges (6) arranged between the filter discs (4) the non-woven layer which has formed on the outer side of the filter plates, wherein the quantity of the suspension (1) supplied to the container (7) is controlled in a manner dependent on the torque of the drive (2) so as to ensure the formation of a non-woven layer.

2. Disc filter for separating fibrous materials from a fibrous suspension, having a container (7) for receiving the suspension (1), having a rotatably mounted hollow shaft (3) which extends horizontally in the container (7) and is coupled to a drive (2), having multiple liquid-permeable filter discs (4) which are fastened vertically on the hollow shaft (3) and are spaced apart axially from one another and whose interior space is connected to the hollow shaft (3), having at least one feed (5) for the suspension (1), and having a detachment device (13, 14) which is assigned to each filter disc (4) and serves for transporting into one of the material discharges (6) arranged between the filter discs (4) the non-woven layer which has formed on the outer side of the filter plates, wherein the consistency of the suspension (1) supplied to the container (7) is controlled in a manner dependent on the torque of the drive (2) so as to ensure the formation of a non-woven layer.

3. Disc filter according to Claim 1 or 2, **characterized**
**in that** the drive (2) is deactivated in the case of a predefined maximum torque being reached.

4. Disc filter according to Claim 3,
**characterized**
**in that** the predefined maximum torque is above 2000, preferably is greater than 4000, and in particular is above 6000, Nm/filter disc (4).

5. Disc filter according to one of the preceding claims,
**characterized**
**in that** the drive (2) is deactivated in the case of a predefined minimum torque being reached.

6. Disc filter according to one of Claims 1 to 4, **characterized**
**in that** the quantity and/or the consistency of the suspension (1) supplied to the container (7) is increased in the case of a predefined minimum torque being reached.

7. Disc filter according to one of the preceding claims,
**characterized**
**in that** the consistency of the suspension (1) supplied to the container (7) is reduced in the case of a predefined maximum torque limit value being reached.

8. Disc filter according to Claim 7,
**characterized**
**in that** the quantity of the suspension (1) supplied to the container (7) is increased if the rotational speed of the hollow shaft (3) is below a predefined lower rotational-speed limit value.

9. Disc filter according to Claim 7,
**characterized**
**in that** the quantity of the suspension (1) supplied to the container (7) remains constant, or is lowered, if the rotational speed of the hollow shaft (3) is above a predefined upper rotational-speed limit value.

10. Disc filter according to Claims 8 and 9, **characterized**
**in that** the lower and upper rotational-speed limit values are equal.

## Revendications

1. Filtre à disques pour la séparation de matières fibreuses d'une suspension de matières fibreuses, comprenant un récipient (7) pour la réception de la suspension (1), un arbre creux (3) s'étendant horizontalement dans le récipient (7), monté de manière rotative et couplé à un entraînement (2), plusieurs disques filtrants (4) fixés verticalement sur l'arbre creux (3), espacés axialement les uns des autres et perméables aux liquides, dont l'espace intérieur est en liaison avec l'arbre creux (3), au moins une amenée (5) pour la suspension (1), un dispositif de décollement (13, 14) associé à chaque disque filtrant (4) pour le transport de la couche de non-tissé formée sur le côté extérieur des plaques filtrantes dans l'une des sorties de matière (6) agencées entre les disques filtrants (4), la quantité de suspension (1) amenée au récipient (7) étant régulée en fonction du couple de rotation de l'entraînement (2), afin d'assurer la formation d'une couche de non-tissé.

2. Filtre à disques pour la séparation de matières fibreuses d'une suspension de matières fibreuses, comprenant un récipient (7) pour la réception de la suspension (1), un arbre creux (3) s'étendant horizontalement dans le récipient (7), monté de manière rotative et couplé à un entraînement (2), plusieurs disques filtrants (4) fixés verticalement sur l'arbre creux (3), espacés axialement les uns des autres et perméables aux liquides, dont l'espace intérieur est en liaison avec l'arbre creux (3), au moins une amenée (5) pour la suspension (1), un dispositif de décollement (13, 14) associé à chaque disque filtrant (4) pour le transport de la couche de non-tissé formée sur le côté extérieur des plaques filtrantes dans l'une des sorties de matière (6) agencées entre les disques filtrants (4), la densité de matière de la suspension (1) amenée au récipient (7) étant régulée en fonction du couple de rotation de l'entraînement (2), afin d'assurer la formation d'une couche de non-tissé.

3. Filtre à disques selon la revendication 1 ou 2, **caractérisé en ce que** l'entraînement (2) est arrêté lorsqu'un couple de rotation maximal prédéfini est atteint.

4. Filtre à disques selon la revendication 3, **caractérisé en ce que** le couple de rotation maximal prédéfini est supérieur à 2 000, de préférence supérieur à 4 000 et en particulier supérieur à 6 000 Nm/disque filtrant (4).

5. Filtre à disques selon l'une quelconque des revendications précédentes, **caractérisé en ce que** l'entraînement (2) est arrêté lorsqu'un couple de rotation minimal prédéfini est atteint.

6. Filtre à disques selon l'une quelconque des revendications 1 à 4, **caractérisé en ce que** la quantité et/ou la densité de matière de la suspension (1) amenée au récipient (7) est augmentée lorsqu'un couple de rotation minimal prédéfini est atteint.

7. Filtre à disques selon l'une quelconque des revendications précédentes, **caractérisé en ce que** la densité de matière de la suspension (1) amenée au récipient (7) est réduite lorsqu'une valeur limite de couple de rotation maximale prédéfinie est atteinte.

8. Filtre à disques selon la revendication 7, **caractérisé en ce que** la quantité de suspension (1) amenée au récipient (7) est augmentée dans la mesure où la vitesse de rotation de l'arbre creux (3) est inférieure à une valeur limite de vitesse de rotation inférieure prédéfinie.

9. Filtre à disques selon la revendication 7, **caractérisé en ce que** la quantité de suspension (1) amenée au récipient (7) reste constante ou est abaissée dans la mesure où la vitesse de rotation de l'arbre creux (3) est supérieure à une valeur limite de vitesse de rotation supérieure prédéfinie.

10. Filtre à disques selon les revendications 8 et 9, **caractérisé en ce que** la valeur limite de vitesse de rotation inférieure et la valeur limite de vitesse de rotation supérieure sont égales.
